# EUROPÄISCHE PATENTSCHRIFT

(11) **EP 2 997 280 B1**
(45) Veröffentlichungstag und Bekanntmachung des Hinweises auf die Patenterteilung: **19.07.2017**
(21) Anmeldenummer: 14722243.4
(22) Anmeldetag: 09.05.2014
(51) Int. Cl.: F16D 65/097

(54) **BREMSBELAGHALTERUNG EINER SCHEIBENBREMSE**
BRAKE LINING MOUNTING FOR A DISC BRAKE
SYSTÈME DE SUPPORT DE GARNITURE DE FREIN À DISQUE

(30) Priorität: 13.05.2013 DE 102013008226
(43) Veröffentlichungstag der Anmeldung: 23.03.2016
(73) Patentinhaber: KNORR-BREMSE Systeme für Nutzfahrzeuge GmbH, 80809 München (DE)
(72) Erfinder: FISCHL, Tobias, 80336 München (DE)
(86) Internationale Anmeldenummer: PCT/EP2014/059564
(87) Internationale Veröffentlichungsnummer: WO 2014/184111

(56) Entgegenhaltungen:
- EP-A2- 0 877 176
- DE-A1- 2 520 768
- DE-A1- 4 020 287
- DE-B3-102006 023 964

## Beschreibung

Die Erfindung betrifft eine Bremsbelaghalterung einer Scheibenbremse nach dem Oberbegriff des Anspruchs 1.

In der DE 40 20 287 A1 ist eine gattungsgemäße Bremsbelaghalterung geoffenbart, die sich insbesondere auch unter den vielfach rauen Betriebsbedingungen, denen Scheibenbremsen in Nutzfahrzeugen ausgesetzt sind, bewährt hat.

Zur Positionssicherung der beiden Bremsbeläge sind diese jeweils mit einer Belaghaltefeder versehen, die im oberen, einer Montageöffnung des Bremssattels zugewandten Randbereich am jeweiligen Bremsbelag befestigt sind. Von einem sich quer dazu, also in Achsrichtung der Bremsscheibe erstreckenden Belaghaltebügel, der sich an den Belaghaltefedern abstützt, werden die Bremsbeläge unter Vorspannung in den Belagschacht eines ortsfesten Bremsträgers oder eines Bremssattels gedrückt. Dabei ist der Belaghaltebügel in zwei sich gegenüberliegenden, die Montageöffnung begrenzenden Bereichen des Bremssattels festgelegt.

Die Lagerung der Bremsbeläge unter Federspannung dient sowohl einem Toleranzausgleich als auch einer Reduzierung bzw. einer Verhinderung der Entstehung von Klappergeräuschen, wie sie ansonsten im Fahrbetrieb des Fahrzeugs auftreten würden.

Der bekannte Belaghalter in Form des genannten Belaghaltebügels ist als Blechteil ausgebildet, mit einem im Wesentlichen rechteckigen Querschnitt, so dass er mit einer ebenen Unterseite an den Belaghaltefedern anliegt.

Während ein Ende des Belaghalters in eine im Bremssattel vorgesehene Tasche eingesteckt ist, ist das andere Ende gabel- oder ösenförmig ausgebildet mit einer Durchstecköffnung, die von einer angeformten Nase des Bremssattels durchtreten ist, mit einer, bezogen auf die Längserstreckung des Belaghalters, Querbohrung, durch die ein Sicherungsbolzen geführt ist, der sich am Belaghalter abstützt. Dabei ist der Sicherungsbolzen durch eine aufgesteckte Scheibe und/oder einen Splint oder dergleichen gegen axiales Verschieben gesichert.

Die Vielzahl der notwendigen Einzelteile, mit denen der Belaghalter am Bremssattel befestigt wird, aber auch die Ausbildung der das andere Ende des Belaghalters aufnehmenden Tasche ist nur mit einem relativ großen Fertigungs- und Montageaufwand möglich, wobei der Bremssattel aus Gusseisen besteht und die Tasche durch entsprechende gusstechnische Maßnahmen hergestellt werden muss.

Der Montageaufwand, der zur Befestigung des Belaghalters mittels des Sicherungsbolzens und zugehöriger Sicherungsteile erforderlich ist, führt zu entsprechenden Kosten, die naturgemäß der steten Forderung nach einer Kostenoptimierung entgegenstehen. Dies trifft im Übrigen gleichermaßen auf die Herstellung des Bremssattels zu, durch die Maßnahmen, die zum Angießen der Tasche erforderlich sind.

Der Erfindung liegt die Aufgabe zugrunde, eine Bremsbelaghalterung der gattungsgemäßen Art so weiterzuentwickeln, dass sie einfacher und kostengünstiger herstell- und montierbar ist.

Diese Aufgabe wird durch eine Bremsbelaghalterung mit den Merkmalen des Anspruchs 1 gelöst.

Der neue Belaghalter zeichnet sich zunächst einmal durch seine äußerst einfache Herstellung aus, gleichermaßen aber auch durch seine einfache Montage, wobei das Seil, vorzugsweise ein Stahlseil, im weitesten Sinne zu einer Schlaufe geformt ist, deren freie Enden an einem Befestigungselement gehalten sind.

Dieses Befestigungselement ist mit dem Bremssattel verbunden, vorzugsweise verschraubt, wobei hierzu im Bremssattel eine Gewindebohrung vorgesehen ist, in die die Schraube eindrehbar ist.

Das Befestigungselement weist darüber hinaus einen Halter, vorzugsweise in Form einer Scheibe auf, an der die freien Enden gehalten sind.

Wie bisher stützt sich der Belaghalter an den Belaghaltefedern der Bremsbeläge ab, wobei der Belaghalter, d.h. die beiden gebildeten parallel verlaufenden Seilabschnitte straff gespannt derart an den Belaghaltefedern anliegen, dass diese unter Vorspannung gesetzt werden, wodurch der jeweilige Bremsbelag in einen Belagschacht des Bremssattels oder eines fahrzeugseitigen Bremsträgers gedrückt wird.

Zur Spannung der Seilabschnitte kann der die Seilenden haltende Halter ein Spannmittel aufweisen, beispielsweise in Form einer Exzenterscheibe, die in einer der Gewindebohrung für die Befestigungsschraube vorgelagerten Ausnehmung einliegt und bei Verdrehen die Seilabschnitte stramm verspannt.

Da das Befestigungselement zusammen mit dem Belaghalter in Form des Seiles bereits als vorgefertigtes Teil vorliegt, gestaltet sich die Montage des Bremsbelaghalters aus naheliegenden Gründen wesentlich einfacher als dies beim Stand der Technik mit den einzeln zu handhabenden Befestigungsteilen möglich ist. Damit einher geht eine entsprechende Kostenreduzierung, zu der auch die einfachere Herstellung des Bremssattels beiträgt, da auf das Einbringen einer Tasche zur Aufnahme des Belaghalters verzichtet werden kann.

Stattdessen reicht das Anformen eines Sockels, gegebenenfalls mit einer Nut, in der der dem Befestigungselement gegenüberliegende Bereich des Belaghalters einliegt.

Zur Führung der beiden parallelen Seilabschnitte kann im Sattelrücken, nahe dem Befestigungselement ein mit in Längsrichtung der Seilabschnitte ausgerichteten Kerben versehener Höcker angeformt sein.

Die beschriebenen Formgebungen des Bremssattels sind allesamt ohne wesentlichen gießtechnischen Aufwand herstellbar, so dass die Erfindung zu einer kostenoptimierten Herstellung der Scheibenbremse sowie Montage des Belaghalters beiträgt.

Die einfachere und kostengünstigere Herstellung betrifft auch die Fertigung des Belaghalters selbst, da dieser bisher aus einem gestanzten und umgeformten Blechteil gebildet ist, dessen Materialanteil größer ist als der Einsatz eines Seiles. Zudem ist das Seil lediglich von einer Rolle abzulängen und mit dem Befestigungselement, d.h. mit dem Halter zu versehen, was ungleich einfacher möglich ist als die Herstellung des Belaghalters aus Blech, zuzüglich der Sicherungselemente in Form eines Sicherungsbolzens sowie eines Splintes oder dergleichen.

Weitere vorteilhafte Ausbildungen der Erfindung sind in den Unteransprüchen gekennzeichnet.

Ein Ausführungsbeispiel der Erfindung wird nachfolgend anhand der beigefügten Zeichnungen beschrieben.

Es zeigen:
- Figur 1: eine Bremsbelaghalterung in einer in einem Teilausschnitt dargestellten Scheibenbremse in perspektivischer Ansicht
- Figuren 2 und 3: jeweils einen Teilausschnitt der Bremsbelaghalterung, gleichfalls perspektivisch dargestellt.

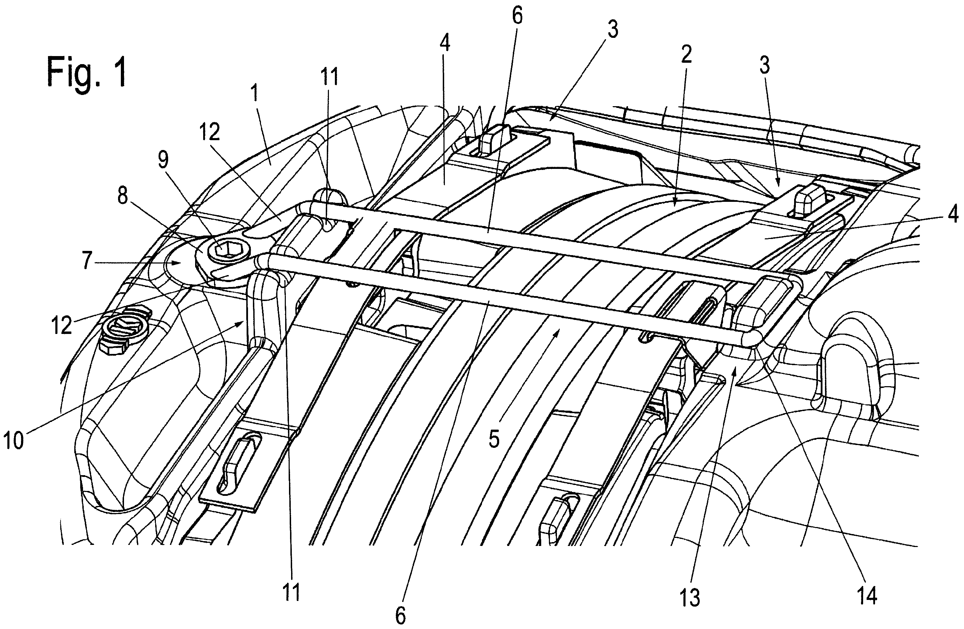

In der Figur 1 ist ein Teilausschnitt einer Scheibenbremse für ein Nutzfahrzeug gezeigt, mit einem Bremssattel 1, in dem zwei, beidseitig einer Bremsscheibe 2 zugeordnete Bremsbeläge 3 positioniert sind.

Beide Bremsbeläge 3 sind jeweils mittels einer Belaghaltefeder 4 federbelastet in einem Belagschacht eines ortsfesten, nicht dargestellten Bremsträgers oder in dem Bremssattel 1 gehalten.

Dabei erstreckt sich die jeweilige Belaghaltefeder 4 quer zur Achsrichtung der Bremsscheibe 2 und ist radial auslenkbar an dem Bremsbelag 3 befestigt.

Mittels eines sich in Achsrichtung der Bremsscheibe 2 erstreckenden, eine Montageöffnung des Bremssattels 1 überspannenden Belaghalters 5, der sich an den Belaghaltefedern 4 abstützt, sind diese unter Vorspannung gesetzt, so dass die Bremsbeläge 3 gegen den Grund des Belagschachtes gedrückt werden.

Erfindungsgemäß besteht der Belaghalter 5 aus einem Seil, vorzugsweise einem Stahlseil, mit zwei parallel und abständig verlaufenden Seilabschnitten 6, die an den Belaghaltefedern 4 anliegen. Der Belaghalter 5 ist im Sinne einer Schlaufe geführt und mit zwei freien Endbereichen 12 in einem Halter 8, der scheibenförmig ausgebildet ist, befestigt.

Durch den Halter 8 ist eine Schraube 9 geführt, die in eine nicht gezeigte Gewindebohrung des Bremssattels 1 eingedreht ist.

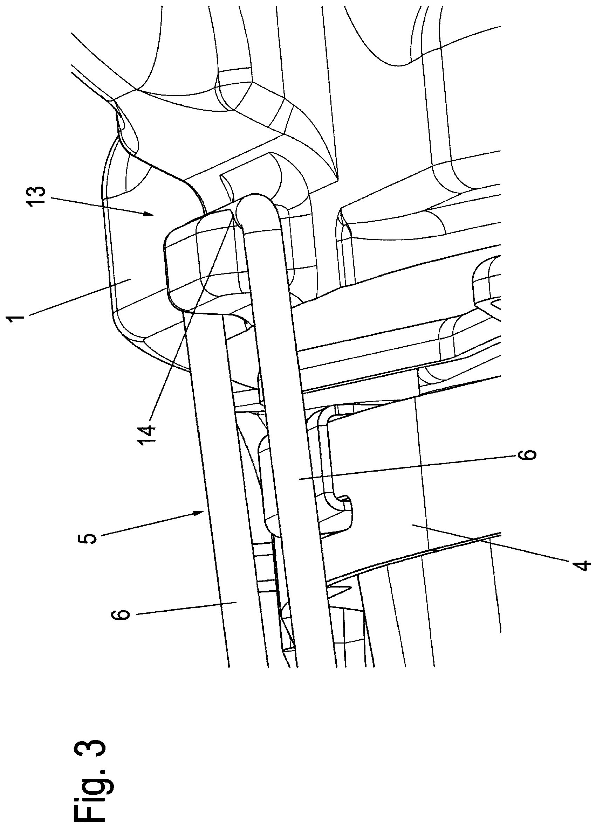

Das gegenüberliegende Ende, des einen U-förmigen Verlauf bildenden Belaghalters 5 ist in einer Nut 14 eines an den Bremssattel 1 angeformten Sockels 13 gehalten, wobei sich die Nut 14, die in der in der Figur 3 vergrößerten Darstellung deutlich zu erkennen ist, quer zur Achsrichtung der Bremsscheibe 2, d.h. quer zu den Seilabschnitten 6 erstreckt und auf der dem zugeordneten Bremsbelag 3 abgewandten Seite in den Sockel 13 eingebracht ist.

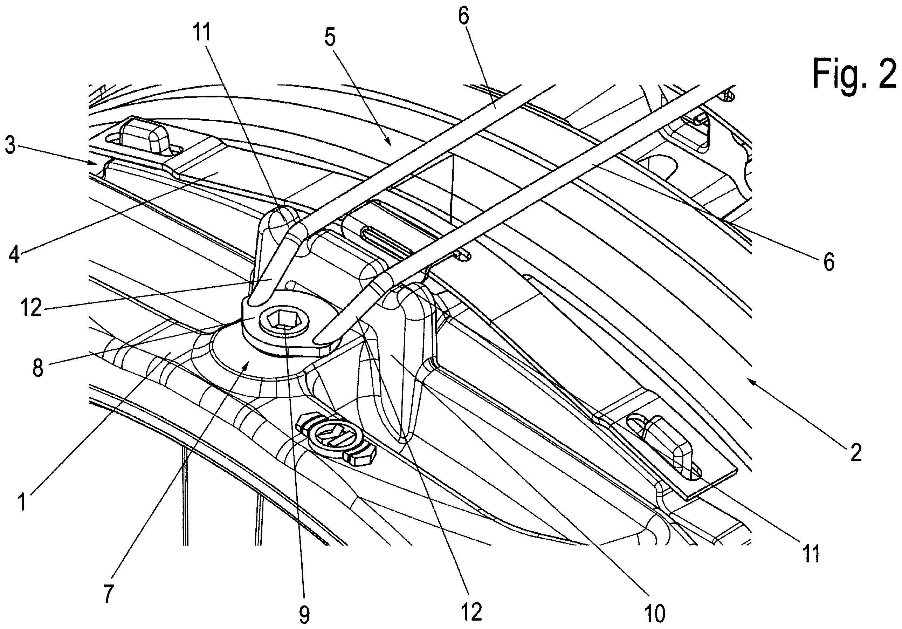

Der dem Sockel 13 gegenüberliegende Endbereich des Belaghalters 5 ist als Einzelheit in einer anderen Perspektive in Figur 2 abgebildet, wobei zu erkennen ist, dass benachbart einem Befestigungselement 7, dessen Bestandteil der Halter 8 ist, ein Höcker 10 an den Bremssattel 1 angeformt ist, zweckmäßigerweise ebenso wie der Sockel 13 angegossen, wenn der Bremssattel 1 aus Gusseisen besteht.

Der Höcker 10 weist oberseitig zwei abständig zueinander angeordnete, sich in Achsrichtung der Bremsscheibe 2 erstreckende Kerben 11 auf, in denen die Seilabschnitte 6 zur Führung einliegen.

Die Endbereiche 12 sind gegenüber den angeschlossenen Seilabschnitten 6 zum Bremssattel 1 hin geneigt verlaufend, wozu das Befestigungselement 7 tiefer liegt als die Kerben 11.

Zum Spannen des Belaghalters 5, bei dem der Sockel 13 ein Widerlager bildet, ist an den Halter 8 eine nicht erkennbare, da verdeckt liegende Exzenterscheibe angeordnet, mit der bei Verdrehen die Seilabschnitte 6 spannbar sind, so dass eine dauerhafte Vorspannung der Belaghaltefedern 4 gewährleistet ist.

### Bezugszeichenliste

- 1: Bremssattel
- 2: Bremsscheibe
- 3: Bremsbelag
- 4: Belaghaltefeder
- 5: Belaghalter
- 6: Seilabschnitt
- 7: Befestigungselement
- 8: Halter
- 9: Schraube
- 10: Höcker
- 11: Kerbe
- 12: Endbereich
- 13: Sockel
- 14: Nut

## Patentansprüche

1. Bremsbelaghalterung einer Scheibenbremse für ein Nutzfahrzeug, mit einem Belaghalter (5), der sich an Belaghaltefedern (4) von beidseitig einer Bremsscheibe (2) in einem Bremssattel (1) angeordneten Bremsbelägen (3) abstützt, wobei der Belaghalter (5) eine Montageöffnung des Bremssattels (1) in Achsrichtung der Bremsscheibe (2) überspannt, **dadurch gekennzeichnet, dass** der Belaghalter (5) aus einem Seil besteht.

2. Bremsbelaghalterung nach Anspruch 1, **dadurch gekennzeichnet, dass** der Belaghalter (5) zwei parallel und abständig zueinander angeordnete Seilabschnitte (6) aufweist, die an den Belaghaltefedern (4) anliegen.

3. Bremsbelaghalterung nach Anspruch 1 oder 2, **dadurch gekennzeichnet, dass** der Belaghalter (5) aus einem Stahlseil gebildet ist.

4. Bremsbelaghalterung nach einem der vorhergehenden Ansprüche, **dadurch gekennzeichnet, dass** der Belaghalter (5) bzw. der Verlauf des Seiles U-förmig ist.

5. Bremsbelaghalterung nach einem der vorhergehenden Ansprüche, **dadurch gekennzeichnet, dass** die freien Endbereiche (12) mittels eines Befestigungselementes (7) am Bremssattel (1) gehalten ist.

6. Bremsbelaghalterung nach Anspruch 5, **dadurch gekennzeichnet, dass** das Befestigungselement (7) einen Endbereiche (12) des Belaghalters (5) aufnehmenden Halter (8), vorzugsweise in Form einer Scheibe sowie eine durch diesen geführte und in eine Gewindebohrung des Bremssattels (1) eingedrehte Schraube (9) aufweist.

7. Bremsbelaghalterung nach einem der Ansprüche 5 oder 6, **dadurch gekennzeichnet, dass** das Befestigungselement (7) zum Spannen der Seilabschnitte (6) eine Spanneinrichtung aufweist.

8. Bremsbelaghalterung nach Anspruch 7, **dadurch gekennzeichnet, dass** die Spanneinrichtung aus einer in einer Aufnahme des Bremssattels (1) einliegenden Exzenterscheibe besteht.

9. Bremsbelaghalterung nach einem der Ansprüche 5 bis 8, **dadurch gekennzeichnet, dass** dem Befestigungselement (7) zugeordnet am Bremssattel (1) ein Höcker (10) angeformt ist, an dem sich die Seilabschnitte (6) abstützen.

10. Bremsbelaghalterung nach Anspruch 9, **dadurch gekennzeichnet, dass** der Höcker (10) zwei in Längsrichtung der Seilabschnitte (6) verlaufende, abständig zueinander angeordnete Kerben (11) aufweist, in denen jeweils ein Seilabschnitt (6) einliegt.

11. Bremsbelaghalterung nach einem der Ansprüche 9 oder 10, **dadurch gekennzeichnet, dass** auf der dem Höcker (10) gegenüberliegenden, die Montageöffnung begrenzenden Seite ein Sockel (13) am Bremssattel (1) angeordnet ist, um den der Belaghalter (5) geführt ist.

12. Bremsbelaghalterung nach Anspruch 11, **dadurch gekennzeichnet, dass** der Sockel (13) auf der der Bremsscheibe (2) abgewandten Seite eine quer zur Längserstreckung der Seilabschnitte (6) verlaufende Nut (14) aufweist, in der ein Teilbereich des Belaghalters (5) einliegt.

## Claims

1. Brake lining mounting for a disk brake for a commercial vehicle, having a lining holder (5) which is supported on lining holding springs (4) of brake linings (3) which are arranged in a brake caliper (1) on both sides of a brake disk (2), the lining holder (5) spanning a mounting opening of the brake caliper (1) in the axial direction of the brake disk (2), **characterized in that** the lining holder (5) consists of a cable.

2. Brake lining mounting according to Claim 1, **characterized in that** the lining holder (5) has two cable sections (6) which are arranged parallel to and at a spacing from one another and bear against the lining holding springs (4).

3. Brake lining mounting according to Claim 1 or 2, **characterized in that** the lining holder (5) is formed from a steel cable.

4. Brake lining mounting according to one of the preceding claims, **characterized in that** the lining holder (5) or the course of the cable is U-shaped.

5. Brake lining mounting.according to one of the preceding claims, **characterized in that** the free end regions (12) are held on the brake caliper (1) by means of a fastening element (7).

6. Brake lining mounting according to Claim 5, **characterized in that** the fastening element (7) has a holder (8) which receives end regions (12) of the lining holder (5), preferably in the form of a disk, and a screw (9) which is guided through said holder (8) and is screwed into a threaded bore of the brake caliper (1).

7. Brake lining mounting according to either of Claims 5 and 6, **characterized in that** the fastening element (7) has a tensioning device for tensioning the cable sections (6).

8. Brake lining mounting according to Claim 7, **characterized in that** the tensioning device consists of an eccentric cam which lies in a receptacle of the brake caliper (1).

9. Brake lining mounting according to one of Claims 5 to 8, **characterized in that** a bump (10) is formed integrally on the brake caliper (1) in a manner which is assigned to the fastening element (7), on which bump (10) the cable sections (6) are supported.

10. Brake lining mounting according to Claim 9, **characterized in that** the bump (10) has two notches (11) which run in the longitudinal direction of the cable sections (6), are arranged at a spacing from one another, and in which in each case one cable section (6) lies.

11. Brake lining mounting according to either of Claims 9 and 10, **characterized in that** a base (13) is arranged on the brake caliper (1) on the side which lies opposite the bump (10) and delimits the mounting opening, around which base (13) the lining holder (5) is guided.

12. Brake lining mounting according to Claim 11, **characterized in that**, on the side which faces away from the brake disk (2), the base (13) has a groove (14) which runs transversely with respect to the longitudinal extent of the cable sections (6) and in which a part region of the lining holder (5) lies.

## Revendications

1. Montage de la garniture d'un frein à disque pour un véhicule utilitaire, comprenant un porte-garniture (5), qui s'appuie sur des ressorts (4) de maintien de garniture (3) de frein disposés des deux côtés d'un disque (2) de frein dans un étrier (1) de frein, le porte-garniture (5) recouvrant une ouverture de montage de l'étrier (1) de frein, dans la direction axiale du disque (2) de frein, **caractérisé en ce que** le porte-garniture (5) est constitué d'un câble.

2. Montage de garniture de frein suivant la revendication 1, **caractérisé en ce que en ce que** le porte-garniture (5) a deux tronçons (6) de câble, qui sont disposés parallèlement et à distance l'un de l'autre et qui s'appliquent aux ressorts (4) de maintien de garniture.

3. Montage de garniture de frein suivant la revendication 1 ou 2, **caractérisé en ce que** le porte-garniture (5) est constitué d'un câble en acier.

4. Montage de garniture de frein suivant l'une des revendications précédentes, **caractérisé en ce que** le porte-garniture (5) ou le tracé du câble est en forme de U.

5. Montage de garniture de frein suivant l'une des revendications précédentes, **caractérisé en ce que** la partie (12) d'extrémité libre est maintenue sur l'étrier (1) de frein au moyen d'un élément (7) de fixation.

6. Montage de garniture de frein suivant la revendication 5, **caractérisé en ce que** l'élément (7) de fixation a un support (8), de préférence sous la forme d'un disque, recevant des parties (12) d'extrémité du porte-garniture (5) ainsi qu'une vis (9) le traversant et vissée dans un taraudage de l'étrier (1) de frein.

7. Montage de garniture de frein suivant l'une des revendications 5 ou 6, **caractérisé en ce que** l'élément (7) de fixation a un dispositif tendeur pour tendre les tronçons (6) de câble.

8. Montage de garniture de frein suivant la revendication 7, **caractérisé en ce que** le dispositif tendeur est constitué d'un disque à excentrique inséré dans un logement de l'étrier (1) de frein.

9. Montage de garniture de frein suivant l'une des revendications 5 à 8, **caractérisé en ce que**, associé à l'élément (7) de fixation, il est formé sur l'étrier (1) de frein, une bosse (10) sur laquelle s'appuient les tronçons (6) de câble.

10. Montage de garniture de frein suivant la revendication 9, **caractérisé en ce que** la bosse (10) a deux encoches (11), qui s'étendent dans la direction longitudinale des tronçons (6) de câble, qui sont disposées à distance l'une de l'autre et dans lesquelles pénètre respectivement un tronçon (6) de câble.

11. Montage de garniture de frein suivant l'une des revendications 9 ou 10, **caractérisé en ce que**, du côté opposé à la bosse (10) et délimitant l'ouverture de montage, est disposé un socle (13) autour duquel est guidé le porte-garniture (5).

12. Montage de garniture de frein suivant la revendication 11, **caractérisé en ce que** le socle (13) a, du côté éloigné du disque (2) de frein, une rainure (14), qui s'étend transversalement à la direction longitudinale des tronçons (6) de câble et dans laquelle pénètre une région partielle du porte-garniture (5).
